# EUROPEAN PATENT SPECIFICATION

(11) **EP 0 470 081 B1**
(45) Date of publication and mention of the grant of the patent: **09.10.1996**
(21) Application number: 90905193.0
(22) Date of filing: 28.03.1990
(51) Int. Cl.: A01G 25/02

(54) **DRIP IRRIGATION PIPE AND METHOD OF PRODUCING THE SAME**
TROPFBEWÄSSERUNGSROHR UND VERFAHREN ZU DESSEN HERSTELLUNG
TUYAU D'IRRIGATION PAR EGOUTTEMENTS ET SON PROCEDE DE FABRICATION

(30) Priority: 05.04.1989 GR 89010021
(43) Date of publication of application: 12.02.1992
(73) Proprietor: PLASTIKA KRITIS S.A., 71110 Iraklion (GR)
(72) Inventor: PUST, Detlev, A., W., D-8000 München 82 (DE); LEBIDAKIS, Ioannis, GR-71110 Iraklion (GR)
(74) Representative: Schwabe, Hans-Georg, Dipl.-Ing.
(86) International application number: EP9000492
(87) International publication number: WO9011681

(56) References cited:
- EP-A- 0 309 162
- AU-B- 518 937
- US-A- 3 672 571

## Description

The invention concerns a drip irrigation pipe according to the preamble of claim 1, to achieve a "strangulation" of the water flow. Such a strangulation is required to adjust the amount of the water flowing out of the pipe for irrigation purposes to a relatively small amount. In addition this invention concerns a method for producing a drip irrigation pipe according to the preamble of claim 16.

The problem of drip irrigation has been faced by the up-to-date technology mainly by inserting independent drippers in the pipe. The insertion is done either with the use of a special mechanism on-line or manually depending on the type of the drippers. These drippers have a meander or helical path in which the water strangulation (and therefore the drip irrigation) is achieved. A drip irrigation pipe with strangulation channel has been manufactured for short-life pipes. Also in this case the strangulation is done with flow diversion through small cross-sectional areas.

The structures using independent drippers have to achieve the necessary strangulation in a relatively short length of the flow path (which is limited by the length of the dripper) and therefore the crosse-sectional area of this flow path through the dripper has to be reduced.

The existing systems of short-life pipe suffer from the same disadvantage of small cross-sectional areas. Practically, this results in flow interruption (blocking) by even small quantities of particles or minerals deposits.

AU-B-518 937 describes a drip irrigation pipe comprising a main pipe for supplying water; a continous pressure reduction conduit extending along the whole length of the main pipe; the conduit being attached to the main pipe; the conduit having water inlet openings and water outlet openings at intervals and having pressure reducing means which include an irregular conduit shape with successive narrowings and then widenings; and outlet means for supplying water to the environment for irrigation.

The conduit of this prior art drip irrigation pipe is formed as a capillary tube (0.75 mm, for example). The capillary tube may be provided with a series of transverse dimples which serve to cause turbulence to the flow through the capillary tube to aid flow restriction. The dimples tend to narrow the capillary tube even more.

EP-A1-0 309 162 describes an irrigation hose comprising a substrate forming a hose body; and an extruded linear strip bonded to the substrate longitudinally thereof; the strip having spaced turbulent-flow channel sections formed therein, the thickness of the material of the strip being substantially the same at all points thereof; and the strip and substrate having water inlet and outlet openings formed therein at respectively opposite ends of the channel sections. Each channel section is separate from the next one and has its own water inlet and outlet openings. The dimensions of the channel sections are not given in this prior art document. It may be concluded that the cross sectional area of the channel sections will have to be rather small in order to achieve the required flow strangulation from the water inlet to the associated water outlet of an individual channel section.

The drip irrigation pipe according to the present invention is based on the prior art drip irrigation pipe according to prior art document AU-B-518 937 as mentioned above and should overcome the shortcommings of this known pipe. According to the present invention this object is solved by a drip irigation pipe including the features of claims, providing that an interruption of flow due to particles of minerals is avoided.

Such a drip irrigation pipe can only be fabricated by the method according to claim 20.

The special conduit for pressure reduction has a tubular or special profile cross section and is running along the whole length of the main pipe internally or externally. Thus reduction of the water pressure is achieved using successive narowings-widenings, diversion of the water flow direction or combination of the above inside the embodied conduit, while assuring small water supply inside the embodied pressure reduction conduit using at the same time large cross-sectional areas and particular subsequently arranged diaphragms in such a way that the interruption of flow due to particles or minerals is avoided. The flow out of this small water supply will be in small quantities through holes of proper dimensions and at proper distances which will be opened during the production of the drip irrigation pipe with embodied pressure reduction conduit. The water will enter the embodied pressure reduction conduit through holes of proper dimension and shape which will act as filter well in order to prevent particles from entering the conduit.

The scope of the invention includes the method of production of the special conduit for drip irrigation and the drip irrigation pipe.

The use of the continuous conduit for pressure reduction has the advantage that the strangulation cross-sectional area is larger and therefore the probability of blocking or flow interruption is considerably reduced, in relation to the existing drip irrigation systems. The provision for use and installation of a seperate special conduit for pressure reduction allows this special conduit to be designed in such a manner that the way of strangulation is optimized using successive narrowings-widenings, flow diversion or their combination including said subsequently arranged diaphragms thus achieving both strangulation and self-cleaning from particles or minerals deposits, in contradiction to the existing short-life systems where only flow diversion is applied using small cross-sectional areas and therefore the flow interruption is not avoided.

Further advantage of the use of separate special continuous conduit for pressure reduction is the possibility of installing more than one conduits in the same main pipe in the case that the flow-out distances require small strangulation length. The successive flow-out holes can belong to different conduits in such a way that the strangulation length is the proper one. In addition using the continuous conduit, the production of the long life drip irrigation pipe is simplified because the special system for the insertion of the drippers used in the existing systems is not required.

The continuous conduit for pressure reduction may be embodied in different forms and shapes. According to a preferred embodiment of the invention, the conduit has a cross section which varies along the length of the conduit, thus providing alternating narrowings and widenings. This may be achieved by changing the diameter in step-wise fashion or (alternatively) in wave-like fashion, for example. According to a further preferred embodiment to the invention, the continuous conduit for pressure reduction can have diaphragms or obstacles along its length or it can be without diaphragms according to the demand. Its cross-section can be circular or special profile or generally any proper shape with constant or variable cross-sectional area while the water flow path inside the conduit can be any form which ensures narrowings -widenings, flow diversion or their combination. In addition the distances of the narrowings-widenings and flow diversions as well as their rest geometrical specifications can be uniform or non-uniform or to vary in any way along the flow path. The conduit can have one or more stranguation paths (channels) along its length. Each of them can have or not have its own water inlet or outlet wholes, and it can communicate or not (through proper holes) with its neighbour channel(s). In the case that the conduit is profile-shaped it can have a straight channel which runs parallel to the strangulation channel(s). The water enters the strangulation channel(s) from groups of holes opened at proper distances and after running some length it flows in the straight channel of the conduit. Then the water can flow out to the environment through holes which can be opened at any point of the straight channel. This structure reduces the problem of blocking due to insects. Any of the above shapes the conduit has, it will always be embodied in the same way in the main pipe and it will be continuous.

The invention will be explained subsequently in more detail with respect to the accompanying drawings, in which
- Fig. 1a to Fig. 1h: show preferred embodiments of the special conduit according to the present invention, where;
- Fig. 1a: shows an axial cross section of a conduit having a constant outer cross-section and having diaphragms inside;
- Fig. 1b: shows an axial cross of another embodiment of a conduit according to the present invention having diaphragms with sharp edges;
- Fig. 1c: shows a detailed part, in enlarged scale, of Fig. 1b;
- Fig. 1d: shows a cross section in a direction perpendicular to the longitudinal direction, of a conduit according to the present invention having a circular cross section;
- Fig. 1e: shows cross sections, of other conduits according to the present invention having rectangular cross sections;
- Fig. 1f: shows two cross sections similar to Figs. 1e of other conduits according to the present invention having cross section in the shape of a section of an arc;
- Fig. 1g: show axial cross sections of two further embodiments of the conduit in the case when there exist diaphragms forming angle different than 90° with the wall of the conduit.
- Fig. 1h: shows an axial cross section of still another embodiment of the conduit for the case where the distances between the diaphragms are such that only water flow diversion is involved.
- Fig. 2: shows a cross section through another embodiment of a pipe according to the present invention in a direction perpendicular to the axial direction thereof;
- Fig. 3: shows a cross section through the pipe of Fig. 2 along the plane indicated by arrows in Fig. 2;
- Fig. 4: shows a schematic side view for a profile shaped conduit, while fig. 5 is similar to fig. 4 but the inlet and outlet openings have the form of a slit.
- Fig. 6, 7 and 8: show cross sections of three further embodiments employing the continuous conduit in combination with plastic film.

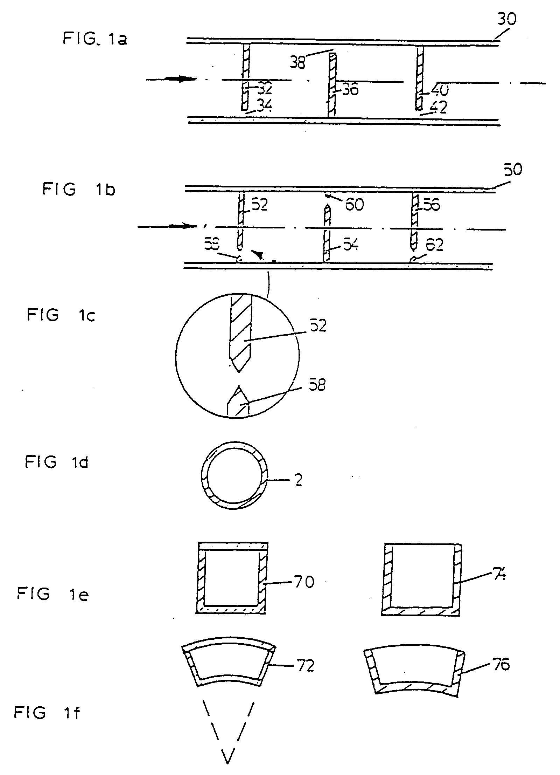

Figs. 1a to 1h show specific details of several embodiments of the pressure reduction conduit according to the present invention.

Fig. 1a shows still another embodiment of the conduit 30 having the shape of a profile with diaphragms arranged at proper distances. In more detail, water enters conduit 30 at the left hand side thereof, as indicated by the thick arrow in fig. 1a, and flows to the right until the flow is obstructed by a first diaphragm 32 and the wall of conduit 30. The water after gap 34 of conduit 30 then enters into the next wider passage thereof and is again obstructed by a further diaphragm 36. Diaphragm 36 extends from the opposite wall of the conduit 30, as compared to diaphragm 32, leaving open only a small gap 38 similar to gap 34. Diaphragm 36 is followed, in the direction of flow of the water, by a further diaphragm 40 similar to diaphragm 32 which leaves open a small gap 42 similar to gap 34. The same procedure is followed along the whole length of the pipe.

Thus, in the conduit 30 shown in fig. 1a narrowings are employed by gaps (34, 38, 42) and also a diversion of the direction of water flow, which results from the alternating arrangement of diaphragms 32, 36, 40

Fig. 1b shows a still further embodiment of a conduit 50 according to the present invention. Conduit 50 is similar to conduit 30 shown in fig. 1a in that conduit 50 also has diaphragms 52, 54, 56. The gaps 34, 38, 42 in fig. 1a, however, are formed between the tip of the respective diaphragm and the inner surface of the wall of conduit 30. In the conduit 50 shown in fig. 1b, similar gaps are formed between the tips of diaphragm 52, 54, 56, respectively, and the tips of shorter diaphragms 58, 60, 62, respectively. Thus, the diversion of the direction of the water flow is less in the embodiment shown in fig. 1b than in the embodiment shown in fig. 1a.

The embodiment of the conduit 50 shown in fig. 1b may present further advantages, if the edges of the diaphragm sections which are aligned with each other are formed as sharp or pointed edges, as shown in an enlarged view in fig. 1c for the diaphragm sections 52, 58 of fig. 1b. The sharp edges of the diaphragm sections 52, 58 serve to reduce any danger that particulate matter or minerals might be trapped in the narrowing between the two diaphragm sections. Firstly, the danger of any particulate material or minerals being trapped between two sharp or pointed edges is very small in itself, because the sharp edges have a very small lenght in the axial direction of the water flow. Secondly, any particulate matter or mineral which is nevertheless trapped between these two edges tend to be removed due to the pressure applied on them and to their poor atachment on the walls of the narrowing in combination with the local increase of speed.

Fig. 1d shows a cross section through a conduit having a circular cross section, for example the conduit 2 or the conduit 20 mentioned above. In this respect it is to be noted that conduit 2 and conduit 20 are circular incross section, the cross section taken along a plane perpendicular to the axial extension of these conduits.

Fig. 1e shows two cross sections taken along a plane perpendicular to the axial direction of conduits 70, 74 and it is to be noted that, for example, the above-mentioned conduits 30 and/or 50 may have such rectangular cross section.

Fig. 1f shows still two more embodiments of conduit 72, 76 whose cross sections, taken along a plane perpendicular to the axial direction of the conduits 72, 76 have the shape of the section of an arc segment. The conduits shown in fig. 1a or fig. 1b, respectively, may have a cross section like conduits 72, 76 shown in fig. 1f.

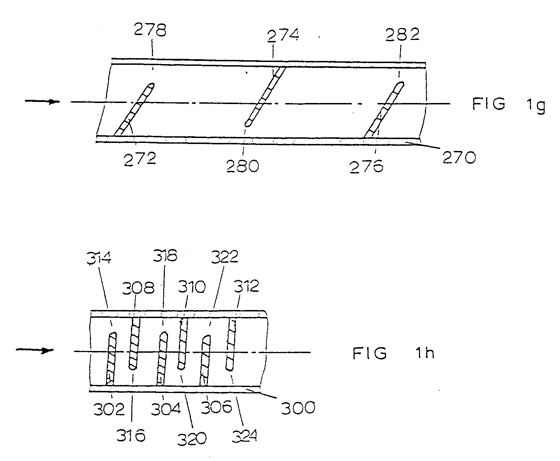

Fig. 1g shows still another embodiment of the conduit 270 where there are diaphragms 272, 274, 276 similar to the diaphragms 32, 36, 40 of fig. 1a, but they form an angle different than 90° with the respective walls of the conduit 270. The gaps 278, 280, 282 operate in a similar manner like 34, 38, 42 in fig 1a in such a way that we have both narrowings-widenings and water flow diversion.

Fig. 1h shows still another embodiment of the conduit 300 where there are diaphragms 302, 304, 306 and 308, 310, 312 similar to the diaphragms 32, 36, 40 of fig. 1a but where the distance between successive diaphragms is of the order of the respective gap 314, 316, 318, 320, 322, 324. Hence essentially we have only water flow diversion and not narrowings-widenings.

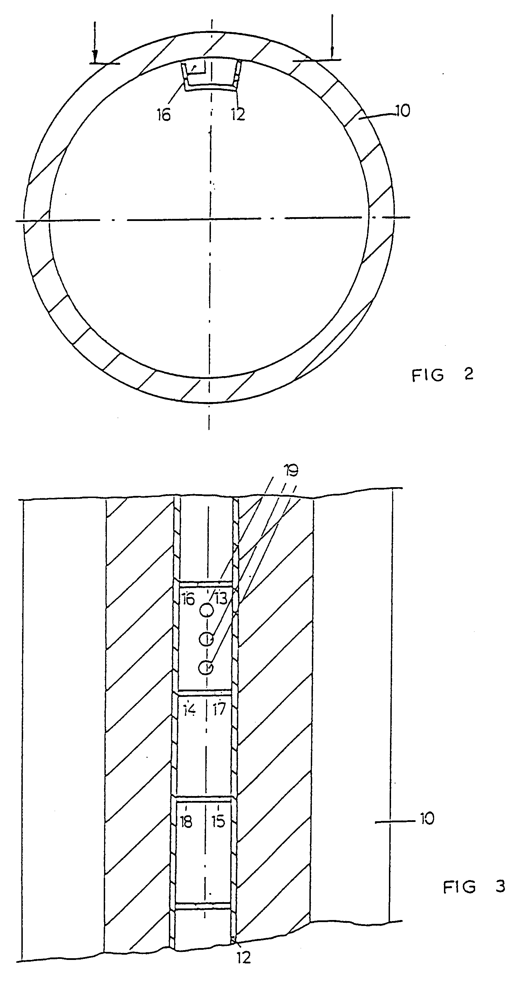

Figs.2 and 3 show an embodiment of the pipe according to the present invention where conduit 12 has a shape, for example, as in fig. 1f, without the upper wall (profile shape, 76) and where diaphragms 13, 14, 15 are provided which are similar to diaphragms 32, 36, 40 of conduit 30 shown in fig.1a.

In more detail, diaphragms 13, 14, 15, and so on, extend in an alternating fashion from the side walls of conduit 12, leaving a gap 16 between diaphragm 13 and the side wall of conduit 12, leaving a gap 17 between diaphragm 14 and the opposite side wall of conduit, and leaving a gap 18 between diaphragm 15 and again the first side wall of conduit 12, respectively. Inlet holes 19 are shown while the outlet holes are not shown in figs. 2 and 3. Respectively the conduit 12 might have diaphragms similar to the diaphragms of the conduit 50 in fig. 1b.

An apparatus for producing any one of the pipes of the present invention may either produce the continuous conduit at the same time as the main pipe 1, or, alternatively, the continuous conduit has already been produced during a previous phase of the manufacturing process, and the conduit is supplied in the production room coiled in jumbo roll.

The conduits according to the present invention, will be produced with the use of special corrugators.

The main pipe is extruded from a suitable plastic material through an extruder to an angular extrusion head similar to the ones used for cable manufacturing. The continuous conduit is supplied to the extrusion head and enters the extrusion head through a second inlet thereon.

Before conduit enters the extrusion head, holes serving as inlet or outlet holes are drilled into the walls of conduit by means of a suitable drilling mechanism.

Alternatively, the holes may be drilled into conduit during the previous production phase thereof.

When the conduit is installed internally of the main pipe, these holes are used for the entrance of the water into the conduit. The drilling is performed at proper locations, depending on the type of the pipe which is to be produced.

When the conduit has entered the extrusion head, is pulled by the flow of plastic material adhered to the outer surface of the conduit due to the irregularities of the outer surface. Then the continuous conduit is installed in the main pipe, that is fixed to the surface of the main pipe.

The main pipe with the conduit fixed thereto leaves the extrusion head, and further downstream another suitable drilling mechanism is provided for drilling holes into the wall of the pipe and the wall of the conduit (when the conduit is of such a shape that it has upper wall). These holes drilled by the drilling mechanism serve as outlet holes for the water for irrigation.

If the conduit is to be installed on the outer surface of the main pipe, the holes of the conduit which either have already been drilled or are drilled during the production of the drip irrigation pipe, are used for the flow out of the water to the environment. In this case, the main pipe is produced, and holes are drilled separately, in order to form entrance holes for the water. Subsequently the conduit will be fixed externally on the pipe.

Figure 1 shows a side view of the inlet and the outlet sections, respectively, of the conduit for the case when the conduit has a closed cross section.

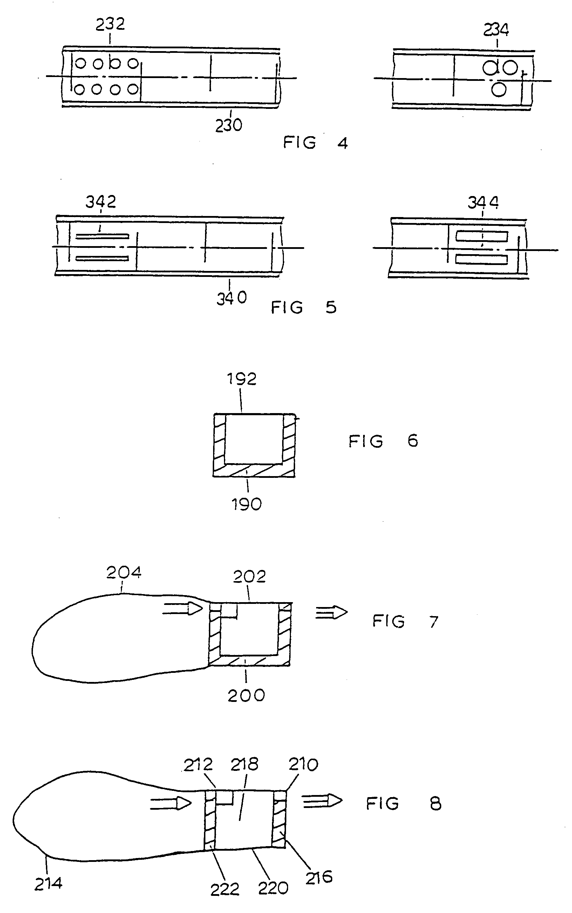

Fig. 4 shows a side view of the inlet and outlet openings of the conduit 230 for the case when the conduit has profile-shaped cross section open from the one side. It is noted that when the conduit is installed on the inner surface of the main pipe it has only inlet section, while when the conduit is installed on the outer surface it has only outlet section because the respective outlet and inlet sections are formed on the wall of the main pipe.

Figure 4 shows a side view of the inlet and the outlet sections, respectively, of the conduit 230 for the case when the conduit has a closed cross section as for example in fig 1d. Conduit 230 has inlet sections 232 and outlet sections 234 arranged at a suitable distance from the inlet sections 232. Inlet section 232 comprises a group of holes of a first diameter. Outlet 234 comprises a group of holes having a second diameter. The diameter of each of the holes in inlet section 232 is smaller than the diameter of each of the holes of the outlet section 234.

Furthermore, the diameter of the each of the holes in inlet section 232 is smaller than each of the gaps or the narrow passages of the conduit according to the present invention. Thus, inlet section 232 effictively serves as filter thus effectively preventing that particles of a size suitable for blocking any of these small passages and/or gaps within the special conduit according to the present invention may be blocked

Fig. 5 shows a view of the inlet and outlet openings of the conduit 340 similar to the one shown in fig. 4 but having slit shaped inlet and outlet openings instead of hole shaped. Also in this case the width of the inlet slit 342 is smaller than the width of the gap or narrow passage of the conduit in order to act as filter. For the rest the situation is similar to what described for fig. 4.

Figures 6, 7 and 8 show three further embodiments of the present invention where the continuous conduit is used with plastic film. Figure 6 shows a cross section in a plain perpendicular to the axial direction of a conduit 190. Three walls of conduit 190 are shaped as a U-shape profile, whereas the fourth wall is formed by a film 192 with the use of conventional methods. The conduit of this shape can also be used in the form of segments as independent drip irrigation units.

As shown in figure 7, such film may also serve as the main pipe, if no high mechanical strength of the main pipe is required. The special conduit has a U-shaped section 200, and the upper wall of the conduit is formed by a foil 202. Foil 202 is actually a section of a foil 204 which forms the main pipe according to the present invention. Water enters the special conduit 200 in a direction indicated by the double arrow in figure 7 and flows out of the special conduit in the direction indicated by the triple arrow. The connection between film and conduit is achieved with the use of conventional methods.

In fig. 8 is shown a case similar to the one of fig. 7 according to the present invention where the conduit 210 has only two side walls (222, 216) which are connected to each other via the flow strangulation diaphragms (218) while the film 214 forms the two other walls 212, 220.

With respect to particular advantageous dimensions of the conduits mentioned above, the holes or slits in the inlet sections thereof, for example, the inlet sections (242, 232, 342) preferably have a diameter or width of one millimeter each. Then, the extension of the gaps or narrow passages of the conduits is preferably of diameter 1.5 mm or of cross-section 1,2 mm x 1,2 mm, respectively. The axial distance between two diaphragms is preferably of the order of 6 mm or 1.3 mm. The size of the conduit is preferably of the order of diameter 3 mm or cross-section 3 mm x 3 mm, for a cross section as described in figures 1d, 1e, 1f for example. Under a water pressure of 1 bar, such a conduit having a length of 1m, will output approximately 4,2 liters of water per hour. A straight round pipe with a constant diameter of 3 mm will output more than approximately 120 liters of water per hour under the same conditions. Thus, the pipe according to the present invention is particularly well suited for drip irrigation purposes.

It is to be noted, however, that the pipe according to the present invention may be used in several other cases where a rather large quantity of a fluid shall be supplied in rather small quantities at a plurality of outlet openings.

The preferred material for the pipe and the special conduit according to the present invention is polyethylene of either low or high density (LDPE, HDPE), the linear polyethylene (LLDPE), the polypropylene (PP) or their mixtures, in mixing with carbon black in proper quantities. It is possible though that any other thermoplastic material could also be used.

## Claims

1. A drip irrigation pipe comprising
a) a main pipe (1) for supplying water;
b) a continuous pressure reduction conduit (2) extending along the whole length of the main pipe (1);
c) the conduit (2) being attached to the main pipe (1);
d) the conduit (2) having water inlet openings and water outlet openings at intervals and having pressure reducing means which include an irregular conduit shape with successive narrowings (MIN) and then widenings (MAX);
e) outlet means (4) for supplying water to the environment for irrigation;
f) the conduit (2) has large cross-sectional areas such that an interruption of flow due to particles or minerals is avoided;
g) said conduit (30) has diaphragms (32, 36, 40, 52, 58, 54, 60, 56, 62) arranged at the inside of said conduit (30) spaced apart from each other in regular intervals in the longitudinal or axial direction of said conduit, said diaphragms (32, 36, 40) each providing a flow restriction (34, 38, 42) for the water flow;
**characterized** in that
h) subsequently arranged diaphragms each comprise at least one section (32, 36, 40; 52, 58, 54, 60, 56, 62), which sections are one after another extended in different directions with respect to the center axis of the conduit (30), in particular extended from the opposite walls of the conduit (30), each diaphragm leaving open said flow restriction which is a small gap, leaving a distance between each of said diaphragms and the opposing wall of the conduit (30), said distance being smaller than a distance between successive diaphragms (32, 36, 40), thus effecting water strangulation as well as self-cleaning effects.

2. A pipe according to claim 1, **characterized** in that said pressure reducing means include a flow diversion.

3. A pipe according to one of claims 1 or 2, **characterized** in that said diaphragms (32, 36, 40) are arranged spaced apart from each other in regular intervals in the longitudinal or axial direction of said conduit.

4. A pipe according to one of claims 1 to 3, **characterized** in that said diaphragms (252, 258; 254, 260; 256, 262) form angles different than 90° with the respective wall or walls of the conduit (30).

5. A pipe according to one of claims 1 to 4, **characterized** in that each of said diaphragms (52, 58; 54, 60; 56, 62) comprises two sections, one being longer (52, 54, 56) and the other shorter (58, 60, 62) which is aligned with respect to said associated longer section (52, 54, 56), and being spaced apart with respect thereto for forming said small gap.

6. A pipe according to claim 5, **characterized** in that each of said diaphragm sections comprises a sharp or pointed edge (52, 58), said edges being disposed in mutually aligned relationship for forming said gap therebetween.

7. A pipe according to one of claims 1 to 6, **characterized** in that each of said diaphragms (32, 36, 40) forms a 90° angle with the respective wall of the conduit.

8. A pipe according to one of claims 1 to 7, **characterized** in that said conduit (2) has an essentially circular cross section in a plane perpendicular to the axial direction of said conduit (2).

9. A pipe according to one of claims 1 to 7, **characterized** in that said conduit (70, 74) has an essentially rectangular cross section in a plane perpendicular to the axial direction of said conduit (2).

10. A pipe according to one of claims 1 to 7, **characterized** in that said conduit (72, 76) has a cross section in a plane perpendicular to the axial direction of said conduit in the shape of a section of an arc segment.

11. A pipe according to one of claims 1 to 10, **characterized** in that said conduit (2, 12) is disposed at the inner surface of said pipe (1, 10).

12. A pipe according to any one of claims 1 to 10, **characterized** in that said conduit (102) is disposed at the outer surface of said pipe (100).

13. A pipe according to any one of claims 1 to 12, **characterized** in that said pipe (110) has two or more conduits (112, 114).

14. A pipe according to any of claims 1 to 13, **characterized** in that said conduit (82, 122) comprises two (84, 86; 124, 126) or more channels extending in mutual parallel relationship along the length of said conduit (82; 122), said channels (84, 86; 124, 126) communicating through at least one opening (90; 130).

15. A pipe according to claim 14, **characterized** in that said conduit (122) has two (124, 126) or more water flow strangulation channels.

16. A pipe according to any of the claims 1 to 15, **characterized** in that said conduit (122) has two (124, 126) or more strangulation channels extending in a mutual parallel relationship along the said conduit (122), said channels being sealed with respect to one another, said channels (124, 126) not communicating with each other and each has its own flow out openings.

17. A pipe according to one of claims 1 to 16, **characterized** in that said conduit (240, 230, 340) has an inlet section (242, 232, 342) comprising a plurality of holes or slits, each having a diameter or width smaller than the minimum space or gap formed inside said conduit.

18. A pipe according to one of claims 1 to 17, **characterized** in that said conduit has a profiled section (190, 200, 210) covered by a plastic film (192, 202, 212, 220) for forming said conduit (190, 192; 200, 202, 210, 212, 220).

19. A pipe according to claim 18, **characterized** in that said film (202, 204, 212, 220, 214) is adapted to cover said conduit section (200, 210) and to form said pipe (204, 214).

20. A method for producing a drip irrigation pipe, in particular a pipe according to any one of the preceding product claims, comprising the following steps:
a) forming a conduit (2) in a production stage before a main pipe (1) is produced;
b) guiding said conduit (2) to a first inlet of a plastics extrusion head (7);
c) supplying molten plastic material from a plastics extruder (6) to a second inlet of said extrusion head (7);
d) forming said main pipe (1) at the outlet of said extrusion head (7);
**characterized** by the following features:
a1) said conduit with a relatively small cross section is formed by means of a corrugator;
d1) said conduit (2) is simultaneously secured to said main pipe (1), while said main pipe (1) is formed.

21. A method according to claim 20, **characterized** in that water inlet openings are formed in said conduit (2) before it enters said extrusion head (7).

22. A method according to claims 20 or 21, **characterized** in that water outlet openings are formed in said pipe (1) and/or in said conduit (2) after said pipe (1) has left said extrusion head (7).

23. A method according to any one of claims 20 to 22, **characterized** in that said conduit (2) is formed by said corrugator immediately before it enters said extrusion head (7).

## Patentansprüche

1. Tropfbewässerungs- bzw. -berieselungsrohr, das aufweist:
a) ein Hauptrohr (1), um Wasser zuzuführen;
b) eine kontinuierliche Leitung (2) zur Druckverringerung, die sich entlang der gesamten Länge des Hauptrohres (1) erstreckt;
c) die Leitung (2) ist an das Hauptrohr (1) angesetzt;
d) die Leitung (2) hat Wassereinlaßöffnungen und Wasserauslaßöffnungen in Intervallen bzw. Abständen und hat Druckverringerungsmittel, die eine unregelmäßige Leitungsform mit aufeinanderfolgenden Verengungen (MIN) und anschließend Erweiterungen (MAX) umfassen;
e) Auslaßmittel (4), um der Umgebung zur Bewässerung bzw. Berieselung Wasser zuzuführen;
f) die Leitung (2) weist große Querschnittsbereiche auf, so daß eine Unterbrechung des Flusses bzw. Stromes aufgrund von Teilchen oder Mineralien vermieden wird;
g) die Leitung (30) hat Zwischenwände bzw. Schlitze bzw. Diaphragmen (32, 36, 40, 52, 58, 54, 60, 56, 62), die an der Innenseite der Leitung (30) voneinander beabstandet in regelmäßigen Abständen in der Längsrichtung oder der Axialrichtung der Leitung angeordnet sind, wobei die Zwischenwände bzw. Schlitze bzw. Diaphragmen (32, 36, 40) jeweils eine Fluß- bzw. Strömungsbeschränkung (34, 38, 42) für den Wasserstrom bzw. -fluß zur Verfügung stellen;
dadurch **gekennzeichnet**, daß
h) aufeinanderfolgend angeordnete Zwischenwände bzw. Schlitze bzw. Diaphragmen jeweils zumindest einen Abschnitt (32, 36, 40; 52, 58, 54, 60, 56, 62) aufweisen, welche Abschnitte einer nach dem anderen in verschiedenen Richtungen im Hinblick auf die Mittelachse der Leitung (30) erstreckt sind, insbesondere von den gegenüberliegenden Wänden der Leitung (30) erstreckt sind, wobei jede Zwischenwand bzw. Schlitz bzw. Diaphragma die Fluß- bzw. Strömungsbeschränkung offenläßt, die eine kleine Lücke bzw. Durchlaß ist, wobei ein Abstand zwischen jedem der Zwischenwände bzw. Schlitze bzw. Diaphragmen und der gegenüberliegenden Wand der Leitung (30) verbleibt, wobei der Abstand kleiner ist als ein Abstand zwischen aufeinanderfolgenden Zwischenwänden bzw. Schlitzen bzw. Diaphragmen (32, 36, 40), wobei folglich eine Wasserstrangulierung bzw. -abschnürung wie auch Selbstreinigungswirkungen verursacht werden.

2. Rohr nach Anspruch 1, dadurch **gekennzeichnet**, daß die Druckverringerungsmittel eine Strömungs- bzw. Flußumlenkung umfassen.

3. Rohr nach einem der Ansprüche 1 oder 2, dadurch **gekennzeichnet**, daß die Zwischenwände bzw. Diaphragmen (32, 36, 40) voneinander beabstandet in regelmäßigen Intervallen bzw. Abständen in der Längs- oder der Axialrichtung der Leitung angeordnet sind.

4. Rohr nach einem der Ansprüche 1 bis 3, dadurch **gekennzeichnet**, daß die Zwischenwände bzw. Diaphragmen (252, 258; 254, 260; 256, 262) Winkel mit der jeweiligen Wand oder Wandungen der Leitung (30) ausbilden, die von 90° unterschiedlich sind.

5. Rohr nach einem der Ansprüche 1 bis 4, dadurch **gekennzeichnet**, daß jede der Zwischenwände bzw. Diaphragmen (52, 58; 54, 60; 56, 62) zwei Abschnitte aufweist, wobei einer länger (52, 54, 56) und der andere kürzer (58, 60, 62) ist, der im Hinblick auf den verbundenen längeren Abschnitt (52, 54, 56) ausgerichtet ist und von diesem beabstandet ist, um die kleine Lücke auszubilden.

6. Rohr nach Anspruch 5, dadurch **gekennzeichnet**, daß die Zwischenwand- bzw. Diaphragmaabschnitte eine scharfe oder punktierte bzw. unterbrochene Kante (52, 58) aufweisen, wobei die Kanten in einem gegenseitig ausgerichteten Verhältnis angeordnet sind, um die Lücke dazwischen auszubilden.

7. Rohr nach einem der Ansprüche 1 bis 6, dadurch **gekennzeichnet**, daß jede der Zwischenwände bzw. Diaphragmen (32, 36, 40) einen Winkel von 90° im Hinblick auf die Wand der Leitung ausbilden.

8. Rohr nach einem der Ansprüche 1 bis 7, dadurch **gekennzeichnet**, daß die Leitung (2) einen im wesentlichen kreisförmigen bzw. runden Querschnitt in einer Ebene senkrecht zu der axialen Richtung der Leitung (2) hat.

9. Rohr nach einem der Ansprüche 1 bis 7, dadurch **gekennzeichnet**, daß die Leitung (70, 74) einen im wesentlichen rechtwinkligen Querschnitt in einer Ebene senkrecht zu der axialen Richtung der Leitung (2) hat.

10. Rohr nach einem der Ansprüche 1 bis 7, dadurch **gekennzeichnet**, daß die Leitung (72, 76) einen Querschnitt in einer Ebene senkrecht zur der axialen Richtung der Leitung in der Gestalt eines Abschnitts eines Bogensegments hat.

11. Rohr nach einem der Ansprüche 1 bis 10, dadurch **gekennzeichnet**, daß die Leitung (2, 12) an der inneren Oberfläche des Rohres (1, 10) angeordnet ist.

12. Rohr nach einem der Ansprüche 1 bis 10, dadurch **gekennzeichnet**, daß die Leitung (102) an der äußeren Oberfläche des Rohres (100) angeordnet ist.

13. Rohr nach einem der Ansprüche 1 bis 12, dadurch **gekennzeichnet**, daß das Rohr (110) zwei oder mehr Leitungen (112, 114) hat.

14. Rohr nach einem der Ansprüche 1 bis 13, dadurch **gekennzeichnet**, daß die Leitung (82, 122) zwei (84, 86; 124, 126) oder mehr Kanäle aufweist, die sich in gegenseitig parallelem Verhältnis entlang der Länge der Leitung (82; 122) erstrecken, wobei die Kanäle (84, 86; 124, 126) über zumindest eine Öffnung (90; 130) in Verbindung stehen.

15. Rohr gemäß Anspruch 14, dadurch **gekennzeichnet**, daß die Leitung (122) zwei (124, 126) oder mehr Wasserströmungs-Abschnürungskanäle bzw. Wasserfluß-Strangulationskanäle hat.

16. Rohr nach einem der Ansprüche 1 bis 15, dadurch **gekennzeichnet**, daß die Leitung (122) zwei (124, 126) oder mehr Strangulations- bzw. Abschnürungskanäle hat, die sich in einem gegenseitig parallelen Verhältnis entlang der Leitung (122) erstrecken, wobei die Kanäle im Verhältnis zueinander abgedichtet sind, wobei die Kanäle (124, 126) nicht mit einander in Verbindung stehen und jeder seine eigenen Ausströmöffnungen hat.

17. Rohr nach einem der Ansprüche 1 bis 16, dadurch **gekennzeichnet**, daß die Leitung (240, 230, 340) einen Einlaßabschnitt (242, 232, 342) hat, der mehrere Löcher oder Schlitze aufweist, die jeweils einen Durchmesser oder eine Breite haben, die kleiner ist als der minimale Raum oder minimale Lücke, die innerhalb der Leitung ausgebildet ist.

18. Rohr nach einem der Ansprüche 1 bis 17, dadurch **gekennzeichnet**, daß die Leitung einen profilierten Abschnitt (190, 200, 210) hat, der durch eine Plastikschicht bzw. einen Plastikfilm (192, 202, 212, 220) bedeckt ist, um die Leitung (190, 192; 200, 202, 210, 212, 220) auszubilden.

19. Rohr gemäß Anspruch 18, dadurch **gekennzeichnet**, daß der Film bzw. die Schicht (202, 204, 212, 220, 214) angepaßt ist, um den Leitungsabschnitt (200, 210) abzudecken und um das Rohr (204, 214) zu bilden.

20. Verfahren zur Herstellung eines Tropfbewässerungs- bzw. -berieselungsrohrs, insbesondere eines Rohrs gemäß einem der voranstehenden Produktansprüche, mit den folgenden Merkmalen:
a) eine Leitung (2) wird in einer Herstellungsstufe ausgebildet, bevor ein Hauptrohr (1) hergestellt wird;
b) die Leitung (2) wird zu einem ersten Einlaß eines Extrusionskopfes (7) für Kunststoff geleitet;
c) geschmolzenes Kunststoffmaterial wird von einem Kunststoffextruder (6) einem zweiten Einlaß des Extrusionskopfes (7) zugeführt;
d) das Hauptrohr (1) wird an dem Auslaß des Extrusionskopfes (7) ausgebildet;
**gekennzeichnet** durch die folgenden Merkmale:
a1) die Leitung wird mit einem vergleichsweise geringen Querschnitt mittels eines Korrugators ausgebildet;
d1) die Leitung (2) wird zugleich an dem Hauptrohr (1) gesichert, während das Hauptrohr (1) ausgebildet wird.

21. Verfahren nach Anspruch 20, dadurch **gekennzeichnet**, daß Wassereinlaßöffnungen in der Leitung (2) ausgebildet werden, bevor es in den Extrusionskopf (7) eintritt.

22. Verfahren gemäß einem der Ansprüche 20 oder 21, dadurch **gekennzeichnet**, daß die Wasserauslaßöffnungen in dem Rohr (1) und/oder in der Leitung (2) ausgebildet werden, nachdem das Rohr (1) den Extrusionskopf (7) verlassen hat.

23. Verfahren gemäß einem der Ansprüche 20 bis 22, dadurch **gekennzeichnet**, daß die Leitung (2) durch den Korrugator ausgebildet wird, unmittelbar bevor es in den Extrusionskopf (7) eintritt.

## Revendications

1. Tuyau d'irrigation par égouttement, comprenant :
a) un tuyau principal (1) d'amenée d'eau;
b) un conduit (2) continu réducteur de pression, s'étendant sur toute la longueur du tuyau principal (1);
c) le conduit (2) étant rapporté au tuyau principal (1);
d) le conduit (2) présentant des orifices d'entrée d'eau et des orifices de sortie d'eau espacés, et comportant des moyens de réduction de la pression qui comprennent une configuration de canal irrégulière avec une succession de rétrécissements (MIN), suivis d'élargissements (MAX);
e) des moyens de sortie (5) pour alimenter l'environnement en eau à des fins d'irrigation;
f) le conduit (2) présente des zones à large section transversale, de sorte qu'une interruption du flux due à des particules ou à des matières minérales est évitée;
g) le conduit (30) présente des diaphragmes (32, 36, 40, 52, 58, 54, 60, 56, 62) agencés à l'intérieur dudit conduit (30) et espacés les uns des autres à des intervalles réguliers dans le sens longitudinal ou axial dudit conduit, lesdits diaphragmes (32, 36, 40) produisant, chacun, un étranglement du flux (34, 38, 42) pour le flux d'eau;
caractérisé en ce que :
h) des diaphragmes disposés successivement comprennent, chacun, au moins une portion (32, 36, 40; 52, 58, 54, 60, 56, 62), lesquelles portions se prolongent l'une après l'autre dans des directions différentes par rapport à l'axe central du conduit (30), et en particulier à partir des parois opposées du conduit (30), chaque diaphragme laissant libre l'étranglement du flux, qui est un petit intervalle, et ménageant une distance entre les diaphragmes précités et la paroi opposée du conduit (30), la distance étant plus petite qu'une distance comprise entre des diaphragmes successifs (32, 36, 40), produisant ainsi un étranglement du flux d'eau, ainsi que des effets d'autonettoyage.

2. Tuyau selon la revendication 1, caractérisé en ce que les moyens de réduction de la pression comprennent une dérivation du flux.

3. Tuyau selon l'une des revendications 1 ou 2, caractérisé en ce que les diaphragmes précités (32, 36, 40) sont disposés avec un espacement les uns des autres, à des intervalles réguliers, dans le sens longitudinal ou axial dudit conduit.

4. Tuyau selon l'une des revendications 1 à 3, caractérisé en ce que les diaphragmes (252, 258; 254, 260; 256, 262) décrivent des angles différents de 90° avec la ou les parois respectives du conduit (30).

5. Tuyau selon l'une des revendications 1 à 4, caractérisé en ce que chacun desdits diaphragmes (52, 58; 54, 60; 56, 62) comprend deux portions, l'une plus longue (52, 54, 56) et l'autre plus courte (58, 60, 62), qui est alignée sur la section plus longue associée (52, 54, 56), et écartée de celle-ci pour former le petit intervalle précité.

6. Tuyau selon la revendication 5, caractérisé en ce que chacun des portions de diaphragme précitées comprend une tranche aiguë ou pointue (52, 58), lesdites tranches étant disposées dans une relation d'alignement mutuel en vue de former l'intérvalle précité les séparant.

7. Tuyau selon l'une des revendications 1 à 6, caractérisé en ce que chacun desdits diaphragmes (32, 36, 40) décrit un angle de 90° avec la paroi respective du conduit.

8. Tuyau selon l'une des revendications 1 à 7, caractérisé en ce que le conduit (2) présente une section transversale essentiellement circulaire, dans un plan perpendiculaire à la direction axiale dudit conduit (2).

9. Tuyau selon l'une des revendications 1 à 7, caractérisé en ce que le conduit précité (70, 74) présente une section transversale essentiellement rectangulaire, dans un plan perpendiculaire à la direction axiale dudit conduit (2).

10. Tuyau selon l'une des revendications 1 à 7, caractérisé en ce que le conduit précité (72, 76) présente une section transversale en forme de secteur de segment d'arc, dans un plan perpendiculaire à la direction axiale dudit conduit.

11. Tuyau selon l'une des revendications 1 à 10, caractérisé en ce que le conduit précité (2, 12) est disposé sur la surface intérieure dudit tuyau (1, 10).

12. Tuyau selon l'une des revendications 1 à 10, caractérisé en ce que le conduit précité (102) est disposé sur la surface extérieure dudit tuyau (100).

13. Tuyau selon l'une des revendications 1 à 12, caractérisé en ce que le tuyau précité (110) présente deux conduits (112, 114) ou plus.

14. Tuyau selon l'une des revendications 1 à 13, caractérisé en ce que le conduit précité (82, 122) comprend deux canaux (84, 86; 124, 126) ou plus, lesquels s'étendent, parallèlement entre eux, sur toute la longueur dudit conduit (82; 122), lesdits canaux (84, 86; 124, 126) étant en communication par au moins un orifice (90; 130).

15. Tuyau selon la revendication 14, caractérisé en ce que le conduit précité (122) présente deux canaux d'étranglement du flux (124, 126) ou plus.

16. Tuyau selon l'une des revendications 1 à 15, caractérisé en ce que le conduit précité (122) présente deux canaux d'étranglement du flux (124, 126) ou plus, s'étendant parallèlement entre eux, sur toute la longueur du conduit précité (122), lesquels canaux sont isolés les uns des autres, les canaux précités (124, 126) ne communiquant pas entre eux et possédant leurs orifices d'écoulement propres.

17. Tuyau selon l'une des revendications 1 à 16, caractérisé en ce que le conduit précité (240, 230, 340) présente un tronçon d'entrée (242, 232, 342) comprenant une pluralité d'orifices ou de fentes, ayant chacun un diamètre ou une largeur inférieure à l'espace ou intervalle minimum prévu a l'intérieur dudit conduit.

18. Tuyau selon l'une des revendications 1 à 17, caractérisé en ce que le conduit précité comporte un tronçon profilé (190, 200, 210) recouvert d'un film de plastique (192, 202, 212, 220), pour former le conduit (190, 192; 200, 202, 210, 212, 220).

19. Tuyau selon la revendication 18, caractérisé en ce que le film (202, 204, 212, 220, 214) est apte à couvrir le tronçon de conduit précité (200, 100) et à former ledit tuyau (204, 214).

20. Procédé pour produire un tuyau d'irrigation par égouttement, en particulier un tuyau selon l'une quelconque des revendications qui précédent, comprenant les étapes suivantes, consistant :
a) à former un conduit (2) a un stade de production qui précède la production d'un tuyau principal (1);
b) à guider le conduit précité (2) vers une première entrée d'une tête (7) d'extrudeuse à plastiques;
c) à acheminer un matériau plastique fondu en provenance d'une extrudeuse à plastiques (6), a une seconde entrée de la tête d'extrudeuse (7) précitée;
d) à former le tuyau principal (1) a la sortie de la tête d'extrusion (7);
caractérisé par les éléments caractéristiques suivants :
a1) le conduit, de section transversale relativement étroite, est mis en forme au moyen d'un conformateur à ondulations interne;
a2) le conduit (2) est fixé au tuyau principal (1) concurremment à la production dudit tuyau principal (1).

21. Procédé selon la revendication 20, caractérisé en ce que des orifices d'entrée d'eau sont formés dans le conduit (2) avant qu'il entre dans la tête d'extrudeuse (7).

22. Procédé selon les revendications 20 ou 21, caractérisé en ce que des orifices de sortie d'eau sont formés dans le tuyau (1) et/ou dans le conduit (2) après que le tuyau (1) est sorti de la tête d'extrudeuse (7).

23. Procédé selon l'une des revendications 20 à 22, caractérisé en ce que le conduit (2) est mis en forme par le conformateur à ondulations immédiatement avant d'entrer dans la tête d'extrudeuse (7).
